# EUROPEAN PATENT APPLICATION

(11) **EP 3 001 041 A1**
(43) Date of publication of application: **30.03.2016**
(21) Application number: 15184811.6
(22) Date of filing: 11.09.2015
(51) Int. Cl.: F04F 5/10, F04F 5/46, F04F 5/54, G21C 15/25

(54) **JET PUMP FOR BOILING WATER REACTOR AND BOILING WATER REACTOR**

(30) Priority: 25.09.2014 JP 2014194853
(71) Applicant: Kabushiki Kaisha Toshiba, Minato-ku Tokyo 105-8001 (JP)
(72) Inventor: WATANABE, Masanobu, TOKYO, 105-8001 (JP); KINUGASA, Kunihiko, TOKYO, 105-8001 (JP); SHIOYAMA, Tsutomu, TOKYO, 105-8001 (JP); TAKEYAMA, Daiki, TOKYO, 105-8001 (JP)
(74) Representative: Awapatent AB

(57) **Abstract**

A jet pump (12) for a boiling water reactor comprises: a riser pipe (31) arranged to be coupled to a reactor pressure vessel of the boiling water reactor; an inlet mixer pipe (33) coupled to the inlet mixer pipe (31); and a diffuser (34) coupled to the inlet mixer pipe (33), the inlet mixer pipe (33) being inserted in the diffuser (34) with a gap (41) provided therebetween. The inlet mixer pipe (33) comprises at least one of a tapered lower end (42a) with a slope angle of 0 ≤ θa < 2° and an upper taper (42b) provided at the gap (41) with a slope angle of 0 ≤ θ_{b} < 2°. A boiling water reactor equipped with such a jet pump (12) is also disclosed.

## Description

### BACKGROUND

### Field

The present embodiments relate to a jet pump for a boiling water reactor as well as to a boiling water reactor.

### Description of the Related Art

In a boiling water reactor, a plurality of jet pumps are installed at intervals in a circumferential direction in an annular space between a reactor pressure vessel and a core shroud installed in the reactor pressure vessel, where the jet pumps are one of the recirculating system apparatuses used to regulate a reactor water flow rate. The jet pump is mainly made up of a riser pipe, an elbow portion, an inlet mixer pipe, and a diffuser.

The riser pipe is fixed by a riser brace welded to a reactor pressure vessel wall, and the diffuser is fixed to an annular pump deck at its lower end. The inlet mixer pipe is supported by a wedge and setscrews on a riser bracket fixed to the riser pipe, and lower part of the inlet mixer pipe is joined to upper part of the diffuser by a sliding joint.

The sliding joint is provided with a slight gap (flow path gap) to absorb thermal expansion as well as to secure an adjustment margin for use during installation of the jet pump, and feed pressure of the pump can cause leakage flow from the clearance.

The leakage flow increases in flow rate with increases in core flow rate, which in turn increases with power increases of the nuclear power generation plant. Besides, even if the core flow rate does not increase, the leakage flow increases, with increases in diffuser pressure loss due to crud adhesion to an inner circumferential surface of the diffuser after extended operation or with increases in core pressure loss due to aging.

As the leakage flow keeps increasing in flow rate, an unstable state occurs at a point when a certain limit value is exceeded and consequently high-amplitude vibration known as self-excited vibration might occur in the jet pump. It is necessary to design the jet pump such that such a specific self-excited vibration will not occur under normal operating conditions.

For example, even though vibration amplitude of the jet pump is very small, random vibration occurs due to flow turbulence inside the jet pump. Although the random vibration does not damage a main body of the jet pump, exposure to the random vibration for an extended period of time will cause sliding wear between the wedge or setscrews fixing the inlet mixer pipe to the riser pipe and the riser bracket. When sliding wear progresses, support performance of the inlet mixer pipe is lost, resulting in reduced rigidity. This lowers the limit value of flow rate at which self-excited vibration is caused by leakage flow through the sliding joint, making self-excited vibration prone to occur.

To deal with this, measures are taken such as installing an adjustment wedge on the riser bracket fixed to the riser pipe and thereby reducing wear and vibration between the wedge or setscrews which support the inlet mixer pipe and the riser bracket.

Besides, techniques are also known which suppress self-excited vibration by correcting causes of generation of the self-excited vibration resulting from leakage flow or by increasing support units for the inlet pipe and thereby increasing rigidity.

As a method for making self-excited vibration resulting from leakage flow less prone to occur, it is conceivable to provide stable flow path geometry by designing gap geometry of the sliding joint to taper along a direction of the leakage flow. The leakage flow path geometry which tapers along the direction of the leakage flow has the effect of making self-excited vibration less prone to occur (for example, see Patent Document 1: Japanese Patent Laid-Open No. 2010-242581).

However, depending on operational status of the nuclear power plant, leakage flow from the sliding joint can become backflow running from outside to inside the jet pump. Backward leakage flow can occur, for example, when the core flow rate is reduced or when a single-pump operation is carried out using a single reactor recirculation pump. When leakage flow runs backward, a tapered flow path geometry created for forward leakage flow spreads out against the backflow, and thus cannot curb generation of self-excited vibration.

It has come to be understood that in some types of BWR, self-excited vibration is less prone to occur when leakage flow runs forward and prone to occur when leakage flow runs backward while in other types of BWR self-excited vibration is less prone to occur when leakage flow runs backward and prone to occur when leakage flow runs forward. Probable causes include the fact that the flow path geometry of leakage flow may vary depending on the type of BWR and the fact that a power range during operation may vary depending on the plant. Accordingly, in relation to, for example, a plant in which self-excited vibration of a jet pump is originally prone to occur only in the case of forward leakage flow, there is demand for a technique which can curb generation of self-excited vibration caused by forward leakage flow without compromising the property of being less prone to self-excited vibration caused by backward leakage flow.

### SUMMARY

The embodiments according to the present invention was conceived in consideration of the circumstances mentioned above and an object thereof is to provide a jet pump for a boiling water reactor and to provide a boiling water reactor equipped with the jet pump, the jet pump being less prone to cause self-excited vibration in the case of forward leakage flow or backward leakage flow.

The above and other objects can be achieved according to the embodiments by providing a jet pump for a boiling water reactor comprising: a riser pipe coupled to a reactor pressure vessel of the boiling water reactor; an inlet mixer pipe coupled to the riser pipe; and a diffuser coupled to the inlet mixer pipe, the inlet mixer pipe being inserted in the diffuser with a gap provided therebetween, wherein the inlet mixer pipe comprises at least one of a tapered lower end with a slope angle of 0 ≤ θₐ < 2° and an upper taper provided at the gap with a slope angle of 0 ≤ θ_{b} < 2°.

The embodiment of the present invention provides the jet pump for a boiling water reactor less prone to cause self-excited vibration both in the case of forward leakage flow and backward leakage flow.

The nature and further characteristic features of the present invention will be made clearer from the following descriptions made with reference to the accompanying drawings.

### BRIEF DESCRIPTION OF THE DRAWINGS

Fig. 1 is a view showing a longitudinal sectional structure of a boiling water reactor (BWR);
Fig. 2 is a view showing an embodiment of a jet pump installed in a reactor pressure vessel of the BWR;
Fig. 3 is a sectional plan view taken along line I-I of Fig. 2;
Fig. 4 is a longitudinal sectional view showing a fitting portion between an inlet mixer pipe and diffuser of the jet pump in the boiling water reactor according to the first embodiment;
Fig. 5 is a graphical representation showing a relation between a slope angle of a tapered lower end with respect to a central axis and a critical flow rate for generation of self-excited vibration when backward leakage flow is produced;
Fig. 6 is a longitudinal sectional view showing a variation of a fitting portion between the inlet mixer pipe and diffuser of the jet pump in the boiling water reactor according to the first embodiment; and
Fig. 7 is a sectional top view showing sliding joint and related portions in a jet pump of a boiling water reactor according to the second embodiment.

### DESCRIPTION OF THE PREFERRED EMBODIMENTS

Hereunder, the present embodiment is described below with reference to the accompanying drawings. It is further to be noted that terms "upper", "lower", "right", "left" and the like terms indicating direction are used herein with reference to the accompanying drawings or in a case of actual usage.

### [First embodiment]

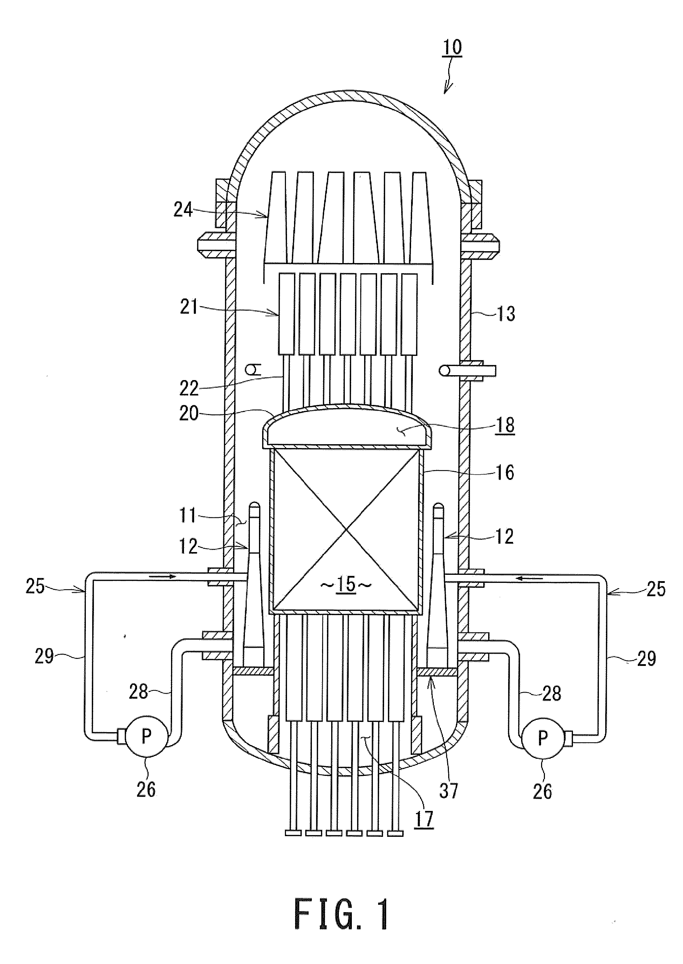

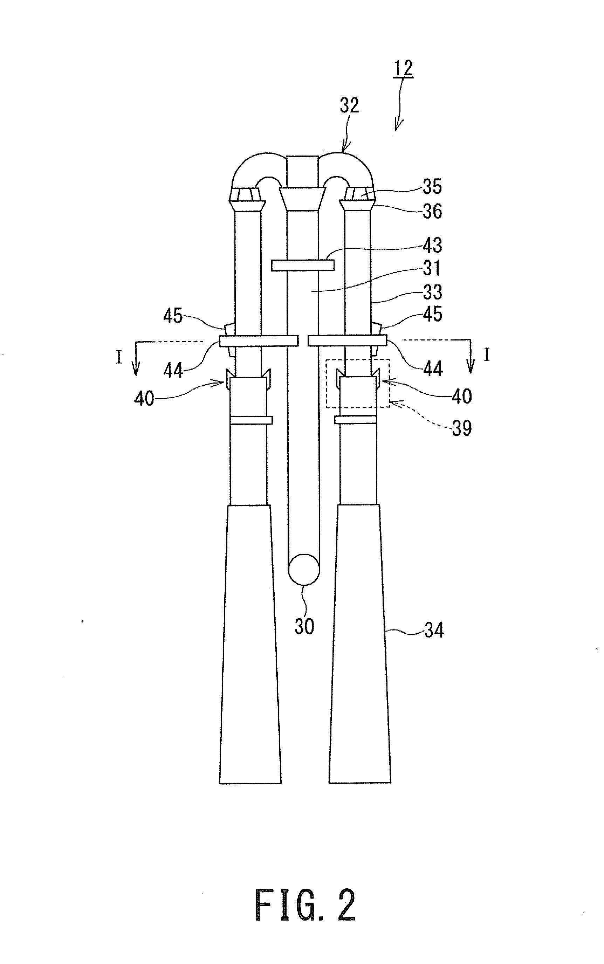

With reference to Figs. 1 and 2 showing a boiling water reactor (BWR) 10 according to an embodiment of the present invention (Fig. 1) and a jet pump 12 (Fig.2) provided in a downcomer portion 11 of the BWR 10, reactor core 15 is installed in a reactor pressure vessel 13, and the downcomer portion 11 sleeve-like or annular in shape is formed between the core shroud 16 surrounding the reactor core 15 and the reactor pressure vessel 13. A plurality of jet pumps 12 are installed along a circumferential direction in the downcomer portion 11, being designed to forcibly circulate primary cooling water in the reactor pressure vessel 13 from a lower core plenum 17 into the reactor core 15. The core shroud 16 is supported by a shroud supporting a pump deck 37.

A shroud head 20 covering an upper core plenum 18 is provided above the reactor core 15 and a steam-water separator 21 is installed above the shroud head 20 via the stand pipe 22. A steam dryer 24 is installed above the steam-water separator 21 to dry the steam separated from water by the steam-water separator 21, supply the dried steam as main steam to a steam turbine (not shown) through a main steam line (system) to drive the steam turbine.

Outside the reactor pressure vessel 13, two primary loop recirculation systems 25 are installed. The primary loop recirculation systems 25 are designed to forcibly circulate a primary coolant in the reactor pressure vessel 13 into the reactor core 15 through the jet pumps 12 using reactor recirculation pumps 26 which are external pumps and take out heat generated in the reactor core 15. The primary loop recirculation systems 25 control pumping rates of reactor recirculation pumps 26, thereby varying a coolant supply flow rate to the reactor core 15, and thereby control reactor thermal power (quantity of steam generated).

A plurality of jet pumps 12, e.g., 16 or 20 jet pumps 12, are placed in the downcomer portion 11 inside the reactor pressure vessel 13. The plurality of jet pumps 12 arranged outside the reactor core 15, forcibly circulate the coolant in reactor pressure vessel 13.

A driving fluid for the jet pumps 12 is a discharge flow of the reactor recirculation pumps 26 as external pumps. The driving fluid is led from the downcomer portion 11 in lower part inside the reactor pressure vessel 13 to the reactor recirculation pumps 26 through an intake pipe 28, and pressurized. The driving fluid pressurized by the reactor recirculation pumps 26 is passed through discharge pipes 29, branched into plural parts by header piping (not shown), and led to the jet pumps 12.

The reactor recirculation pumps 26 have a function to circulate reactor water which is a coolant. The reactor water (driving fluid) discharged from the reactor recirculation pumps 26 flows to the riser pipes 31 of the jet pumps 12 in the reactor pressure vessel 13 through the discharge pipes 29, turns round in elbow parts 32, and is guided to inlet nozzles 35. The reactor water is led to inlet mixer pipes 33 by the inlet nozzles 35 while involving surrounding reactor water (driven fluid), discharged through the diffusers 34, and sent from the lower core plenum 17 to the reactor core 15 (Fig. 1).

As shown in Fig. 2, each jet pump 12 includes the riser pipe 31 configured to rise from a recirculation inlet nozzle 30 to the downcomer portion 11 (Fig. 1), the elbow parts having a 180-degree bent portions installed on a top of the riser pipe 31, the inlet mixer pipes 33 installed downstream of the elbow parts 32, and the diffusers 34 installed downstream of the inlet mixer pipes 33. The elbow parts 32 branches the driving fluid rising up in the riser pipe 31 to both sides, i.e., right and left sides, turns round the driving fluid, and guides the driving fluid to the inlet nozzles 35.

The jet pump 12 includes the inlet nozzles 35 connected to the 180-degree bent elbow parts 32, the inlet mixer pipes 33 mixing the driven fluid with the driving fluid from bell mouths 36 guiding the driven fluid (suction fluid) involved by the driving fluid jetted out from the inlet nozzles 35, and the diffusers 34 connected to downstream sides of the inlet mixer pipes 33. The diffusers 34 are fixed at their lower ends to the pump deck 37 (Fig. 1).

In the jet pump 12, mechanical fitting portions 39 and 40 are provided between inlet portions of the elbow parts 32 and the diffusers 34, configuring the elbow parts 32, inlet nozzles 35, bell mouths 36, and inlet mixer pipes 33 integrated into a one-piece structure to be dismountable.

A lower end of each inlet mixer pipe 33 is inserted and fitted in upper part of the corresponding diffuser 34. A portion where the inlet mixer pipe 33 is inserted in the diffuser 34 constitutes a sliding joint 40. In the sliding joint 40, a slight gap, namely flow path gap 41, is provided between the inlet mixer pipe 33 and the diffuser 34 substantially along a direction of a central axis C of the inlet mixer pipe 33 and/or the diffuser 34.

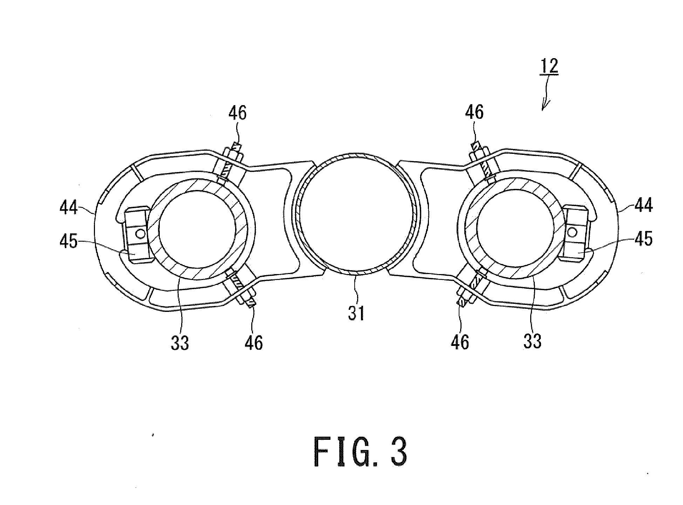

Fig. 3 is a sectional plan view taken along section I-I of Fig. 2.

The riser pipe 31 of the jet pump 12 is fixed to and supported by a riser brace 43 welded to an inner circumferential wall of the reactor pressure vessel 13. Riser brackets 44 mounting the inlet mixer pipes 33 are fixed on both sides of the riser pipe 31 as shown in Fig. 3. The inlet mixer pipes 33 are supported by and fixed to the respective riser brackets 44 at three points using a wedge 45 and setscrews 46.

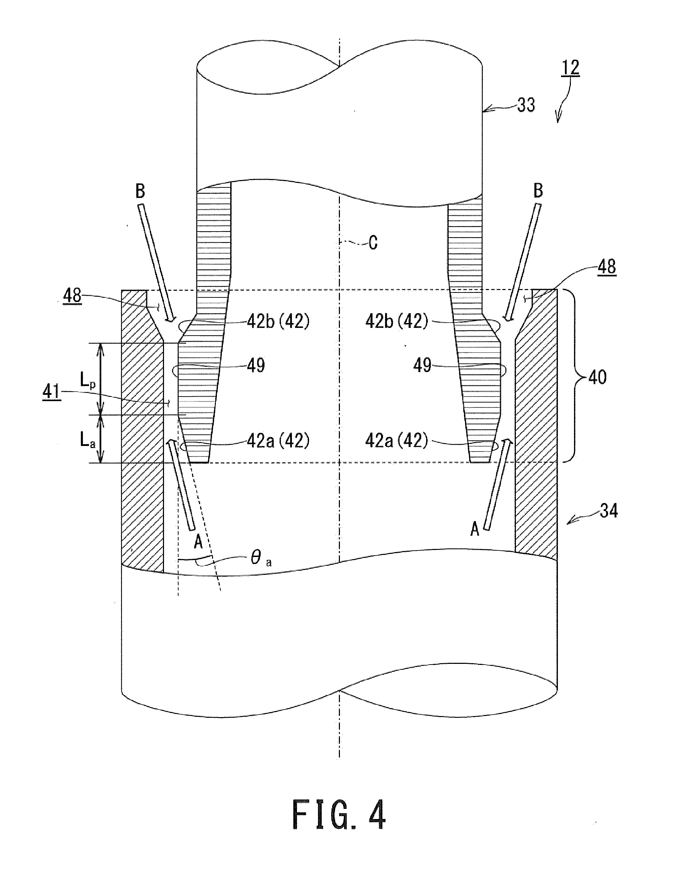

A bulging portion is formed in the lower end of each inlet mixer pipe 33, and lower part of the inlet mixer pipe 33 is fitted in the upper part of the diffuser 34, comprising the sliding joint 40 as shown in Fig. 4. The sliding joint 40 is provided with a slight gap (flow path gap 41) of 1 mm or less to absorb thermal expansion as well as to secure an adjustment margin for use during installation of the jet pump. Generally, a taper is provided at a lower end of the flow path gap 41, i.e., at the lower end of the inlet mixer pipe 33 from a perspective of ease of inserting into the diffuser 34.

During normal operation, a forward leakage flow A at around 0.1% or less of a total flow rate of the jet pump 12 occurs in the flow path gap 41 under fluid feed pressure in the jet pump. On rare occasions, depending on the nuclear power plant and its operation method, a backward leakage flow B opposite the forward leakage flow A may occur, running into the jet pump 12 from outside.

Additive damping caused by a fluid generally depends on a relation between fluid inertia (force) of the fluid and flow path resistance. When the additive damping caused by the fluid is positive, the self-excited vibration does not occur. When flow path geometry gets thin down along a flow direction of the fluid, the additive damping acts as a positive damping force. Accordingly, since the taper provided at the lower end of the inlet mixer pipe 33 forms a thin down flow path with respect to forward flow, the additive damping of the forward leakage flow A acts as a positive damping force with respect to vibration.

Conversely, in the case of a spreading gap geometry, spreading out gradually downstream along the flow direction, the additive damping of leakage flow can become a negative damping force. Accordingly, if backward leakage flow B occurs in the flow path gap 41, the taper can conversely become a factor in giving a negative damping force to vibration of the jet pump 12.

According to the first embodiment, in order to prevent generating self-excited vibration even if there is a backward leakage flow B, the inlet mixer pipe 33 has a tapered lower end 42a with a slope angle of 0 ≤ θₐ < 2° at a lower end as shown in Fig. 4.

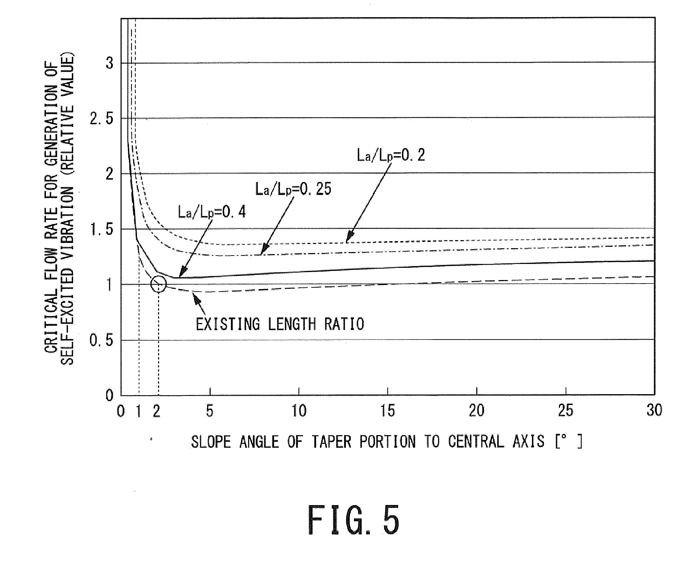

When the slope angle θₐ of the tapered lower end 42a is less than 2°, although the tapered lower end 42a is shaped to spread out toward the backward leakage flow B, self-excited vibration becomes less prone to occur as shown in Fig. 5 described later.

Self-excited vibration can also be made less prone to occur if a ratio of a length Lₐ (a first length : hereinafter referred to as a "lower end taper length Lₐ") along the central axis C of the inlet mixer pipe 33 of the tapered lower end 42a to a length Lₚ (a second length : hereinafter referred to as a "maximum outer diameter length Lₚ") along the central axis C of the inlet mixer pipe 33 having a maximum outside diameter portion 49 in the sliding joint 40 of the inlet mixer pipe 33 along the central axis is set to 0.4 or less.

Fig. 5 is a graphical representation showing a relation between the slope angle θₐ of the tapered lower end 42a with respect to a central axis C and a critical flow rate for generation of self-excited vibration when backward leakage flow B is produced.

The graph predicts the critical flow rate in the case of backward leakage flow by means of theoretical analysis when the slope angle θₐ of the tapered lower end 42a with respect to the central axis C is varied using a length ratio Lₐ/Lₚ of the lower end taper length Lₐ to the maximum outer diameter length Lₚ as a parameter.

The ordinate of the graph has been standardized to the critical flow rate in the case of an existing geometry.

Note that results similar to Fig. 5 are obtained when a slope angle θ_{b} is varied in the case of forward leakage flow.

It can be seen from Fig. 5 that when the slope angle θₐ is varied using the existing length ratio Lₐ/Lₚ of the lower end taper length Lₐ to the maximum outer diameter length Lₚ, the critical flow rate for generation becomes larger than in the case of the existing geometry when θₐ is less than 2°.

That is, even when the flow path geometry spreads out against backward leakage flow, the critical flow rate for generation of self-excited vibration increases in a range of 0 ≤ θₐ < 2°, making self-excited vibration less prone to occur. More preferably, 0 ≤ θₐ ≤ 1° because the critical flow rate for generation increases remarkably when the slope angle θₐ is 1° or less, in particular.

Furthermore, it can be seen that when the length ratio Lₐ/Lₚ is varied and becomes 0.4 or less, the critical flow rate for generation becomes larger than in the case of the existing geometry irrespective of the slope angle θₐ.

That is, it can be seen that self-excited vibration becomes less prone to occur in a range of 0 < Lₐ/Lₚ ≤ 0.4. In other words, it can be seen that in the sliding joint 40 whose upper limit in the direction of the central axis C of the inlet mixer pipe 33 has been stipulated, self-excited vibration can be made less prone to occur if a vibration degree of freedom of the inlet mixer pipe 33 is reduced by giving as large a value as possible to the maximum outer diameter length Lₚ relative to the lower end taper length Lₐ.

Preferably, a taper (hereinafter referred to as "a upper taper 42b") narrowing in a direction opposite of the direction of the taper of the tapered lower end 42a can be provided in an upper end of the sliding joint 40 of the inlet mixer pipe 33. Not only at the upper end of the sliding joint 40, the upper taper 42b can also be provided in the sliding joint 40 at upper side of the lower end of the inlet mixer pipe 33 or the tapered lower end 42a. As described, the upper taper 42b narrows in the direction opposite of the tapered lower end 42a. In other words, the upper taper 42b has a tapered surface whose width is larger at its upper end and smaller at its lower end in the sliding joint 40.

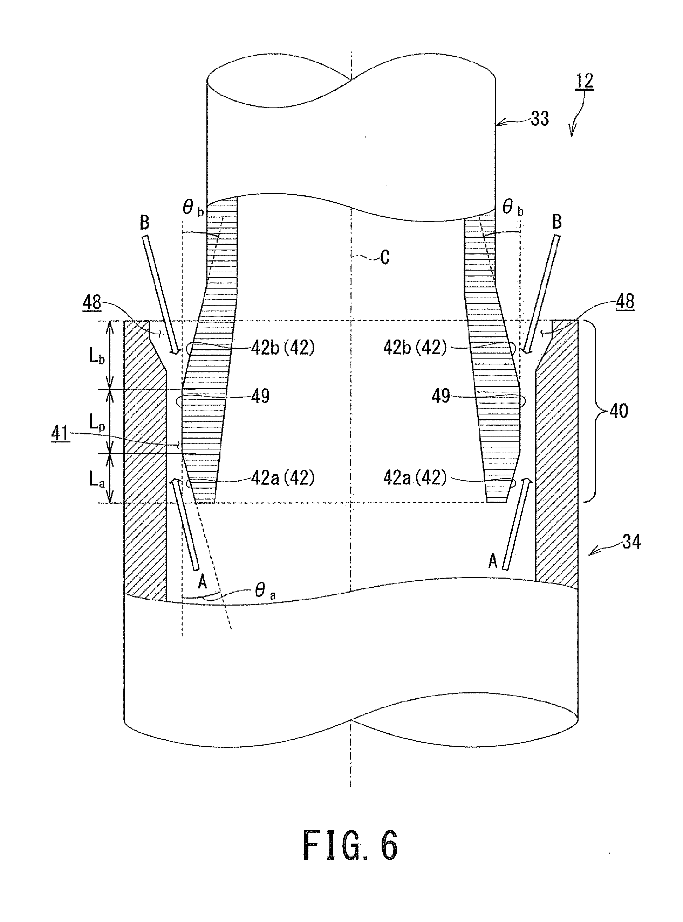

When the self-excited vibration of forward flow is also taken into consideration, the slope angle θ_{b} of the upper taper 42b is set to 0 ≤ θ_{b} < 2° as shown in Fig. 6.

When the slope angle θ_{b} is set to less than 2°, even though the upper taper 42b spreads out against forward leakage flow A, self-excited vibration becomes less prone to occur for reasons similar to those described in determining the slope angle θₐ.

Preferably a length ratio L_{b}/Lₚ of a length L_{b} ( a first length or a third length : hereinafter referred to as an "upper taper length L_{b}") of the upper taper 42b in the direction along the central axis C of the inlet mixer pipe 33 to the maximum outer diameter length Lₚ in the sliding joint 40 of the inlet mixer pipe 33 is set to 0.4 or less, and more preferably to 0.25 or less.

Accordingly, it can be seen that if a geometry of the upper taper 42b is set to satisfy at least one of 0 ≤ θ_{b} < 2° and 0 < L_{b}/Lₚ ≤ 0.4, self-excited vibration becomes less prone to occur even in the case of forward flow.

According to the first embodiment, if the tapered lower end 42a is given the geometry described above, self-excited vibration can be made less prone to occur in the case of backward leakage flow.

By giving the geometry described above to the upper taper 42b, it is possible to make self-excited vibration less prone to occur than is conventionally the case.

The above-mentioned advantages together can make the jet pump less prone to cause self-excited vibration when any of the forward leakage flow A and backward leakage flow B occurs.

As a direction of the leakage flow from the sliding joint 40 depends on the operational status of the nuclear power plant, either one of the lower taper end 42a and upper taper 42b may be sufficient to reduce the self-excited vibration if an assumed leakage flow is only one of the forward leakage flow and the backward leakage flow in the plant. It is preferable to provide both of the tapered lower end 42a and the upper taper 42b if the both of the forward leakage flow and the backward leakage flow can be occurred at the sliding joint 40 of the nuclear power plant.

Although in the present embodiment, the slopes of both tapered lower end 42a and upper taper 42b have been described as being less than 2° (more preferably 1° or less), if one wants to curb generation of self-excited vibration in the case of only one of forward flow and backward flow, the slope of only one of the tapered lower end 42a and upper taper 42b may be set to less than 2° (more preferably 1° or less).

### [Second embodiment]

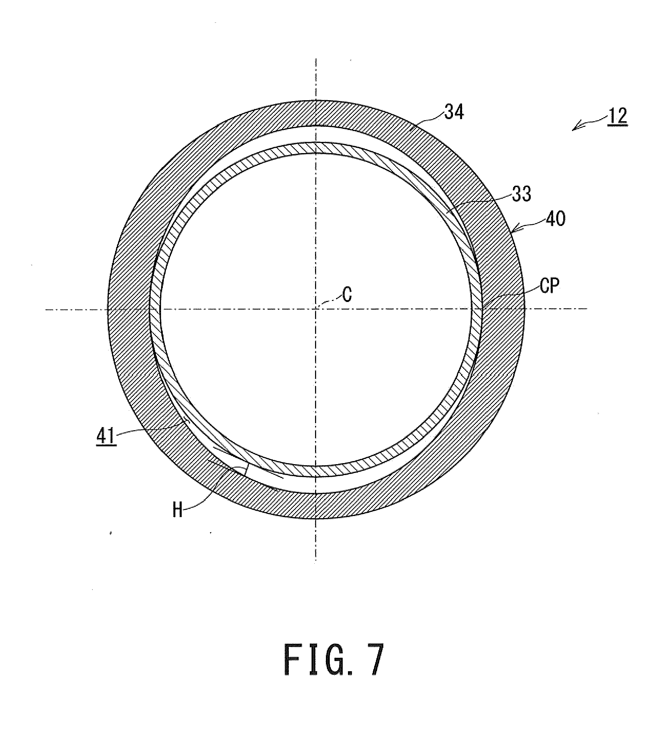

Hereunder, a second embodiment of the present invention will be described below with reference to Fig. 7. Fig. 7 is a sectional top view showing a portion of the sliding joint 40 in a horizontal cross - section, a plane perpendicular to the center axis C, of the inlet mixer pipe 33. In describing the second embodiment, an overall configuration of a boiling water reactor 10 does not differ from that of the BWR shown in Figs. 1 and 2, and thus the same components as those in Figs. 1 and 2 are denoted by the same reference numerals as the corresponding components in Figs. 1 and 2 and redundant description thereof will be omitted.

Fig. 7 is a sectional top view showing the second embodiment of a jet pump 12 applied to the BWR 10. As with the first embodiment, the jet pump 12 according to the second embodiment includes the sliding joint 40 installed in a joining portion between the inlet mixer pipe 33 and diffuser 34.

In the jet pump 12 according to the second embodiment, the inlet mixer pipe 33 includes the tapered lower end 42a and upper taper 42b as with the first embodiment.

A relation of the lower end taper length Lₐ to the maximum outer diameter length Lₚ, a range of the upper taper length L_{b}, and ranges of the slope angle θₐ of the tapered lower end 42a and slope angle θ_{b} of the upper taper 42b are similar to those of the first embodiment.

On the other hand, in the second embodiment, a horizontal cross - section of at least one of an outer circumferential surface of the maximum outside diameter portion 49 and inner circumferential surface of the diffuser 34 is shaped to be out of round.

That is, a flow path width H of the flow path gap 41 formed by the outer circumferential surface of the maximum outside diameter portion 49 and inner circumferential surface of the diffuser 34 differs at their corresponding circumferential position along the circumferential direction of the outer circumferential surface.

When shaped to be out of round, the inlet mixer pipe 33 is installed with a contact point CP with the diffuser 34. In Fig. 7, the inner circumferential surface of the diffuser comprises an elliptical shape. As shown in Fig. 7, two contact points CPs are constitute a minor axis of the ellipse formed with the inner circumferential surface at the horizontal cross - section. In Fig. 7, a line crossing the center axis C which is perpendicular to the minor axis constitutes a major axis of the ellipse.

Furthermore, for example, only one contact point CP is provided at a time of construction and the number of contact points CP may be increased to a plurality of points during operation due to thermal expansion of the inlet mixer pipe 33 or diffuser 34.

Since the inlet mixer pipe 33 has a contact point CP with the diffuser 34, the inlet mixer pipe 33 receives a structural damping force with respect to vibration by keeping mechanical contact with the diffuser 34.

That is, in addition to the advantage of fixing the inlet mixer pipe 33 to the diffuser 34, the contact point CP provides the advantage of suppressing vibration by mechanical contact, which acts as a resistive force against the vibration. If the inlet mixer pipe 33 is brought into contact at a predetermined contact point CP, an installation posture of the inlet mixer pipe 33 can be fixed easily, making it easy to construct the inlet mixer pipe 33 as well.

Accordingly, as with the advantage of the first embodiment, the second embodiment can improve immunity to self-excited vibration and thereby make self-excited vibration less prone to occur.

Even if the inlet mixer pipe 33 is not brought into contact with the diffuser 34, self-excited vibrations is suppressed by a positive damping effect of the fluid, but if the inlet mixer pipe 33 is brought into contact, the mechanical contact structurally adds a positive damping force, further improving the suppression effect. Furthermore, if a lateral load is applied to the diffuser 34 at the contact point CP, the load acts as a resistive force against vibration of the diffuser 34 and has the effect of reducing vibration amplitude.

By identifying a detailed geometry of the inlet mixer pipe 33 which forms the flow path gap 41, the jet pump 12 according to at least one of the embodiments described above can make self-excited vibration less prone to occur when any of the forward leakage flow A and backward leakage flow B occurs.

It is further to be noted that although a few embodiments of the present invention have been described, these embodiments are presented only by way of example, and not intended to limit the scope of the invention.

These embodiments can be implemented in various other forms, and various omissions, replacements, changes, and combinations can be made without departing from the spirit of the invention.

Such embodiments and modifications thereof are included in the spirit and scope of the invention as well as in the invention set forth in the appended claims and the scope of equivalents thereof.

## Claims

1. A jet pump for a boiling water reactor, comprising:
a riser pipe coupled to a reactor pressure vessel of the boiling water reactor;
an inlet mixer pipe coupled to the riser pipe; and
a diffuser coupled to the inlet mixer pipe, the inlet mixer pipe being inserted in the diffuser with a gap provided therebetween, wherein
the inlet mixer pipe comprises at least one of a tapered lower end with a slope angle of 0 ≤ θₐ < 2° and an upper taper provided at the gap with a slope angle of 0 ≤ θ_{b} < 2°.

2. The jet pump for a boiling water reactor according to claim 1, wherein a length ratio of first length, along a central axis of the inlet mixer, of the tapered lower end or the upper taper to a second length along the central axis of the inlet mixer pipe having a maximum outside diameter in an inserted portion where the inlet mixer pipe is inserted in the diffuser is 0.4 or less.

3. The jet pump for a boiling water reactor according to claim 1, wherein:
at least one of an outer circumferential surface of the inlet mixer and an inner circumferential surface of the diffuser in a inserted portion where the inlet mixer pipe is inserted in the diffuser is shaped to be out of round; and
a width of the flow path gap differs along a circumferential direction.

4. The jet pump for a boiling water reactor according to claim 3, wherein a cross-section of the outer circumferential surface and/or the inner circumferential surface has an elliptical shape.

5. The jet pump for a boiling water reactor according to claims 1, wherein the diffuser has a point of contact with the inlet mixer pipe.

6. The jet pump for a boiling water reactor according to claim 1, wherein
the inlet mixer pipe comprises the tapered lower end with a slope angle of 0 ≤ θₐ ≤ 1° and the upper taper with a slope angle of 0 ≤ θ_{b} ≤ 1°,
wherein a first length ratio of a first length, along a central axis of the inlet mixer, of the tapered lower end to a second length along the central axis of the inlet mixer pipe having a maximum outside diameter in an inserted portion where the inlet mixer is inserted in the diffuser is 0.4 or less, and
wherein a second length ratio of a third length along the central axis of the upper taper to a length of the second length is 0.4 or less.

7. A boiling water reactor, comprising:
a reactor pressure vessel;
the jet pump according to any one of claims 1 to 6 coupled with the reactor pressure vessel.
